# EUROPÄISCHE PATENTSCHRIFT

(11) **EP 3 291 940 B1**
(45) Veröffentlichungstag und Bekanntmachung des Hinweises auf die Patenterteilung: **12.09.2018**
(21) Anmeldenummer: 16717969.6
(22) Anmeldetag: 25.04.2016
(51) Int. Cl.: B23K 26/38, B23K 26/08, B23K 26/14

(54) **GASDÜSE MIT VERSCHIEBBARER VENTILHÜLSE**
GAS NOZZLE HAVING A DISPLACEABLE VALVE SLEEVE
BUSE À GAZ À DOUILLE DE SOUPAPE COULISSANTE

(30) Priorität: 04.05.2015 DE 102015208157
(43) Veröffentlichungstag der Anmeldung: 14.03.2018
(73) Patentinhaber: Trumpf Werkzeugmaschinen GmbH + Co. KG, 71254 Ditzingen (DE)
(72) Erfinder: BEA, Martin, 70806 Kornwestheim (DE); HESSE, Tim, 71254 Ditzingen (DE)
(74) Vertreter: Kohler Schmid Möbus Patentanwälte
(86) Internationale Anmeldenummer: PCT/EP2016/059156
(87) Internationale Veröffentlichungsnummer: WO 2016/177595

(56) Entgegenhaltungen:
- WO-A1-2014/072609
- CN-C- 1 234 497
- DE-A1-102012 208 731
- FR-A1- 2 997 883
- JP-A- 2012 130 969

## Beschreibung

Die Erfindung betrifft eine Gasdüse für einen Laserbearbeitungskopf mit einer Austrittsöffnung zum Durchtritt eines Laserstrahls auf ein Werkstück, mit einem die Austrittsöffnung umgebenden Ringspalt und mit einer in dem Ringspalt angeordneten Hülse, die in dem Ringspalt axial verschiebbar zwischen einer hinteren und einer vorderen Stellung geführt ist und die zumindest in der vorderen Stellung über die Austrittsöffnung vorsteht.

Eine derartige Gasdüse ist beispielsweise aus der WO 2014/072609 A1 bekannt geworden.

Für das Bearbeiten (z.B. Schneiden oder Schweißen) unterschiedlicher Materialien (Baustahl, Edelstahl, Aluminium, ...) in unterschiedlicher Materialstärke mit Hilfe eines Laserstrahls werden verschiedene Gasdüsen benötigt, die unterschiedliche Außen- oder Innenkonturen, unterschiedlich geformte Düsenöffnungen und unterschiedliche Düsendurchmesser aufweisen.

Aus der WO 2014/072609 A1 ist eine Gasdüse mit einer Innendüse bekannt, durch die ein Laserstrahl und ein Schneidgas auf ein Werkstück gerichtet werden. In einem die Innendüse umgebenden Ringspalt ist eine Hülse axial verschiebbar geführt und mittels einer Feder in ihre hintere Endstellung vorgespannt. Die rückseitige Stirnseite der Hülse begrenzt im Ringspalt einen Ringraum, der über Verbindungsöffnungen mit der Düsenbohrung der Innendüse verbunden ist. Je höher der Schneidgasdruck, desto weiter wird die Hülse gegen die Rückstellkraft der Feder nach vorne vorgeschoben. Die Hülse ist im Düsenkörper sowohl außenseitig an einer Kappe als auch innenseitig an einem Rohrelement axial verschiebbar geführt und weist an ihrer vorderen Hülsenstirnfläche eine außenseitige Anlaufschräge auf, um über leichte Stufen in der Werkstückoberfläche, wie sie z.B. durch das Kippen freigeschnittener Werkstückteile auftreten können, ohne Beschädigung hinweg gleiten zu können.

Der vorliegenden Erfindung liegt die Aufgabe zugrunde, eine Gasdüse der eingangs genannten Art derart weiterzubilden, dass die Stirnfläche der Hülse auch auf Werkstückteilen mit unebener Werkstückoberfläche oder bei geneigten Werkstücken möglichst immer vollumfänglich auf der Werkstückoberfläche anliegt, um dadurch die Wirkung eines Bearbeitungs- oder Schutzgases bei der Laserbearbeitung zu verbessern und den Gasverbrauch prozesssicher zu verringern.

Diese Aufgabe wird erfindungsgemäß dadurch gelöst, dass die Hülse im Ringspalt verkippbar gelagert ist.

Erfindungsgemäß ist die Hülse im Ringspalt mit einem solchen seitlichen Spiel ("schwimmend") gelagert, dass sie innerhalb des Ringspalts um z.B. ±5° verkippbar gelagert ist. Auf diese Weise kann die Gasdüse auf Unebenheiten der Werkstückoberfläche durch Verkippung reagieren, ohne mechanisch beschädigt zu werden oder den formschlüssigen Kontakt zu der Werkstückoberfläche zu verlieren. Vorteilhaft kann die Hülse einen außen umlaufenden, spitzen oder balligen Zentrierbund aufweisen, der an der Außenwand des Ringspalts verschiebbar geführt und verkippbar gelagert ist. Alternativ oder zusätzlich können sich die Außenwand des Ringspalts in Vorwärtsrichtung und/oder die Hülsenaußenseite in Rückwärtsrichtung, insbesondere konisch, verjüngen, um das Verkippen der Hülse innerhalb des Ringspalts zu ermöglichen.

Um das Gleiten der Hülse über eine unebene Werkstückoberfläche noch weiter zu verbessern, kann die vordere Stirnfläche der Ventilhülse v innen- und/oder außenseitig eine Anlaufschräge, z.B. in Form einer 45°-Fase, aufweisen.

Bevorzugt ist die Austrittsöffnung durch eine Düsenaustrittsöffnung einer Innendüse zum Richten einer Kernströmung auf das Werkstück ausgebildet, und/oder der Ringspalt ist in einer Ringspaltdüse zum Richten einer ringförmigen Gasströmung auf das Werkstück ausgebildet. Im letzteren Fall gibt die Hülse die Düsenquerschnittsfläche der Ringspaltdüse in den beiden Stellungen unterschiedlich weit frei, wobei bevorzugt die Hülse in ihrer einen Stellung die Ringspaltdüse zumindest weitgehend, insbesondere vollständig, verschließt und in ihrer anderen Stellung die Ringspaltdüse freigibt.

Bei einer bevorzugten Ausführungsform der Erfindung sind die Innendüse und die Ringspaltdüse in einem Düsenkörper ausgebildet und können entweder voneinander separate Gasanschlüsse oder, sofern eine Düsenbohrung der Innendüse und der Ringspalt der Ringspaltdüse über mindestens eine Verbindungsbohrung des Düsenkörpers bzw. der Innendüse miteinander verbunden sind, einen gemeinsamen Gasanschluss aufweisen. Im letzteren Fall ist vorteilhaft die Düsenbohrung der Innendüse mit dem Gasanschluss verbunden und der Ringspalt über die Verbindungsbohrung(en) an die Düsenbohrung angeschlossen. Durch Verschieben der Hülse innerhalb des Ringspalts können die strömungsmechanischen Eigenschaften der Gasdüse von der Charakteristik einer Einlochdüse (Einkanaldüse), bei der das Gas nur aus der Innendüse ausströmt, bis hin zu der einer Nebenstromdüse (Mehrkanaldüse), bei der das Gas sowohl aus der Innendüse als auch aus der Ringspaltdüse ausströmt, variiert werden. Die Einlochdüse ist (beim Schneiden) hauptsächlich für die Dünnblechbearbeitung und das Einstechen und die Nebenstromdüse vor allem für die Dickblechbearbeitung vorteilhaft. Mit der erfindungsgemäßen Gasdüse können somit beispielsweise unterschiedlich dicke Werkstücke bearbeitet und insbesondere auch unterschiedliche Bearbeitungsverfahren (z.B. Schneiden, Markieren, Schweißen) realisiert werden. Die Flexibilität der erfindungsgemäßen Gasdüse ermöglicht eine Reduzierung der Variantenvielfalt der bisher benötigten Gasdüsen beim Anwender wie auch bei der Ersatzteilhaltung. Weiterhin können unproduktive Stillstandzeiten der Maschine während eines Düsenwechsels minimiert werden.

In einer Weiterbildung dieser Ausführungsform verbleibt in der hinteren Stellung der Hülse zwischen der hinteren Stirnfläche der Hülse und dem Düsenkörper ein Ringraum, der, insbesondere über einen zwischen Düsenkörper und Hülse vorhandenen Führungsspalt, mit der Außenumgebung verbunden ist, wobei die mindestens eine Verbindungsöffnung als eine sich bis in den Ringraum erstreckende Öffnung ausgebildet ist. Durch den in jeder Hülsenstellung vorhandenen Ringraum und die damit kommunizierende(n) Öffnung(en) ist es möglich, die Hülse aus einer vorgeschobenen Stellung durch eine gezielte Wahl des Gasdrucks bis in ihre hintere Endstellung zu saugen.

In einer anderen bevorzugten Ausführungsform, bei der die Düsenbohrung der Innendüse und der Ringspalt der Ringspaltdüse nicht durch Öffnungen miteinander verbunden sind, ist ein zwischen der hinteren Stirnfläche der Hülse und dem Düsenkörper vorhandener Ringraum, insbesondere über einen zwischen Düsenkörper und Hülse vorhandenen Führungsspalt, mit der Außenumgebung verbunden. Durch den Venturi-Effekt des aus der Innendüse strömenden Schneidgases wird Luft (Sauerstoff) aus der Außenumgebung angesaugt, die sich innerhalb der Hülse mit dem Stickstoff-Schneidgasstrahl vermischt.

Vorheilhaft kann über die konstruktive Gestaltung der Ventilhülse der Anpressdruck der Ventilhülse auf der Werkstückoberfläche gezielt eingestellt werden. Ist derjenige Oberflächenteil der Hülse, auf den der Schneidgasdruck in Vorwärtsrichtung wirkt, größer als derjenige Oberflächenteil der Hülse, auf den - insbesondere bei auf eine Werkstückoberfläche aufgesetzter Hülse - der Schneidgasdruck in Rückwärtsrichtung wirkt, so bewirkt der Schneidgasdruck grundsätzlich eine Anpresskraft der Hülse auf die Werkstückoberfläche. Alternativ kann derjenige Oberflächenteil der Hülse, auf den der Schneidgasdruck in Vorwärtsrichtung wirkt, gleich groß wie oder (etwas) kleiner als derjenige Oberflächenteil der Hülse sein, auf den bei auf eine Werkstückoberfläche aufgesetzter Hülse der Schneidgasdruck in Rückwärtsrichtung wirkt. In diesem Fall halten sich die durch den Schneidgasdruck auf die Hülse wirkenden Auftriebs- und Anpresskräfte unabhängig vom absoluten Gasdruckniveau gerade die Waage oder es stellt sich eine geringe Auftriebskraft ein, so dass die Hülse im Idealfall reibungsfrei, aber trotzdem ständig flächig aufliegend über eine ebene Werkstückoberfläche gleitet oder sich ein minimaler Spalt zwischen der Stirnfläche der Hülse und der Werkstückoberfläche einstellt, so dass die Hülse über der Werkstückoberfläche schwebt. Letztere Ausgestaltung der Hülse ist besonders vorteilhaft für eine kratzerfreie Schneidbearbeitung.

Besonders vorteilhaft ist die Innenwand des Ringspalts durch die Wandung der Austrittsöffnung, insbesondere durch die z.B. konische Außenseite der Innendüse, gebildet. Weiterhin vorteilhaft ist die Hülse an der Außenwand des Ringspalts verschiebbar geführt.

Bei Ausführungsformen, bei denen die Hülse in ihrer einen (End)Stellung die Ringspaltdüse verschließt, ist im Ringspalt ein Ventilsitz angeordnet, an dem die (Ventil)Hülse in ihrer die Ringspaltdüse verschließenden Stellung anliegt.

In einer ersten Weiterbildung dieser Ausführungsform ist der Ventilsitz in der hinteren (End)Stellung der Ventilhülse geschlossen und in der vorderen (End)Stellung der Ventilhülse geöffnet. Der Ventilsitz kann beispielsweise durch einen konischen Wandabschnitt oder einen Ringabsatz des Ringspalts gebildet sein. Der Ventilsitz ist an der Innenwand des Ringspalts angeordnet, aber kann im Falle des Ringabsatzes auch am Grund des Ringspalts gebildet sein. Der konische Wandabschnitt verjüngt sich in Vorwärtsrichtung der Ventilhülse.

In einer zweiten Weiterbildung dieser Ausführungsform ist der Ventilsitz in der vorderen (End)Stellung der Ventilhülse geschlossen und in der hinteren (End)Stellung der Ventilhülse geöffnet. Der Ventilsitz kann beispielsweise durch einen konischen Wandabschnitt oder einen Ringabsatz des Ringspalts gebildet sein, wobei die Ventilhülse eine den Ventilsitz in Rückwärtsrichtung hintergreifende Dichtfläche aufweist. Der konische Wandabschnitt verjüngt sich in Rückwärtsrichtung der Ventilhülse.

Eine mit dem Ventilsitz zusammenwirkende Dichtfläche der Ventilhülse kann an der Ventilhülse einteilig angeformt oder durch einen separaten Dichtring gebildet sein. Im letzteren Fall können die Ventilhülse und der Dichtring aus unterschiedlichen Materialien gefertigt sein, also z.B. eine Ventilhülse aus Keramik und ein Dichtring aus Metall, wodurch die Herstellkosten für die Ventilhülse gesenkt werden und der Dichtring eine präzisere Dichtfläche aufweist als eine einteilige Ventilhülse aus Keramik.

Besonders bevorzugt ist die Hülse aus Keramik (z.B. Aluminiumoxid), da Keramik hochfrequenztechnisch ausreichend neutral bzw. elektrisch nichtleitend ist, so dass die erfindungsgemäße Gasdüse durch die kapazitive Abstandssensorik des Laserbearbeitungskopfs wie eine gewöhnliche Nebenstromdüse (eine Düse ohne integrierte Hülse) behandelt werden kann. Weiterhin gewährleisten der hohe Schmelzpunkt und die hohe Abriebfestigkeit von Keramik eine ausreichend hohe Lebensdauer der Hülse. Statt aus Keramik kann die Hülse aber auch aus einem vergleichbar temperaturbeständigen und elektrisch nichtleitenden Material oder einem bis mindestens 100 °C temperaturbeständigen Kunststoff gebildet sein. Im letzteren Fall sind die Gleiteigenschaften, die Festigkeit und eine Temperaturbeständigkeit (Dauergebrauchstemperatur) bis mindestens 100°C wichtig. Der Reibungskoeffizient bei Bewegung über trockenen Stahl sollte < 0,3 sein. Außerdem muss die relative Dielektrizitätskonstante bei 10⁶ Hz unter 3 liegen. Diese Anforderungen werden beispielsweise von Teflon erfüllt.

Vorzugsweise weist die Hülse in ihrer vorderen Stirnfläche mindestens eine, bevorzugt mehrere schräg zur Radialrichtung verlaufende Nuten oder in ihrer Hülsenwand mindestens eine, bevorzugt mehrere schräg zur Radialrichtung verlaufende Bohrungen auf. Durch die schräge bzw. spiralförmige Ausrichtung der Nuten und Bohrungen übt der Impuls des abströmenden Schneidgases ein Drehmoment auf die Hülse aus, die dadurch in Rotation versetzt wird. Alternativ kann die Hülse auch in ihrer Hülsenwand außenseitig mindestens eine, bevorzugt mehrere schräg zur Axialrichtung verlaufende Nuten aufweisen, so dass die Hülse durch die außen an der Hülse axial entlangströmende Luft oder das außen an der Hülse entlang strömende Prozess- bzw. Schutzgas in Rotation versetzt wird. Durch die rotierende Hülse können beispielsweise Verunreinigen der Werkstückoberfläche beseitigt werden sowie durch mindestens eine, bevorzugt mehrere Bohrungen oder Nuten in der Hülsenwand gezielt eine Modulation des Gasdrucks innerhalb der unter der Hülse befindlichen Prozesszone bewirkt werden.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: eine erste erfindungsgemäße Gasdüse mit einer Ringspaltdüse, die in Fig. 1a in ihrer geschlossenen Endstellung und in Fig. 1b in ihrer geöffneten Endstellung gezeigt ist;
- Fign. 2a, 2b: eine zweite erfindungsgemäße Gasdüse mit einer Ringspaltdüse, die in Fig. 2a in ihrer geschlossenen Endstellung und in Fig. 2b in einer geöffneten Stellung gezeigt ist;
- Fign. 3a, 3b: eine dritte erfindungsgemäße Gasdüse mit einer Ringspaltdüse, die in Fig. 3a in ihrer geschlossenen Endstellung und in Fig. 3b in einer geöffneten Stellung gezeigt ist;
- Fign. 4a, 4b: eine vierte erfindungsgemäße Gasdüse mit einer Ringspaltdüse, die in Fig. 4a in ihrer einen und in Fig. 4b in ihrer anderen Endstellung gezeigt ist;
- Fig. 5: eine fünfte erfindungsgemäße Gasdüse mit einer Ringspaltdüse (ohne Kernströmung); und
- Fign. 6a-6d: verschiedene Modifikationen einer in den Fign. 1 bis 5 gezeigten Hülse, in einer Draufsicht auf die vordere Hülsenstirnseite (Fig. 6a), in einer Querschnittansicht (Fign. 6b, 6d) und in einer perspektivischen Seitenansicht (Fig. 6c).

In der folgenden Beschreibung der Zeichnung werden für gleiche bzw. funktionsgleiche Bauteile identische Bezugszeichen verwendet.

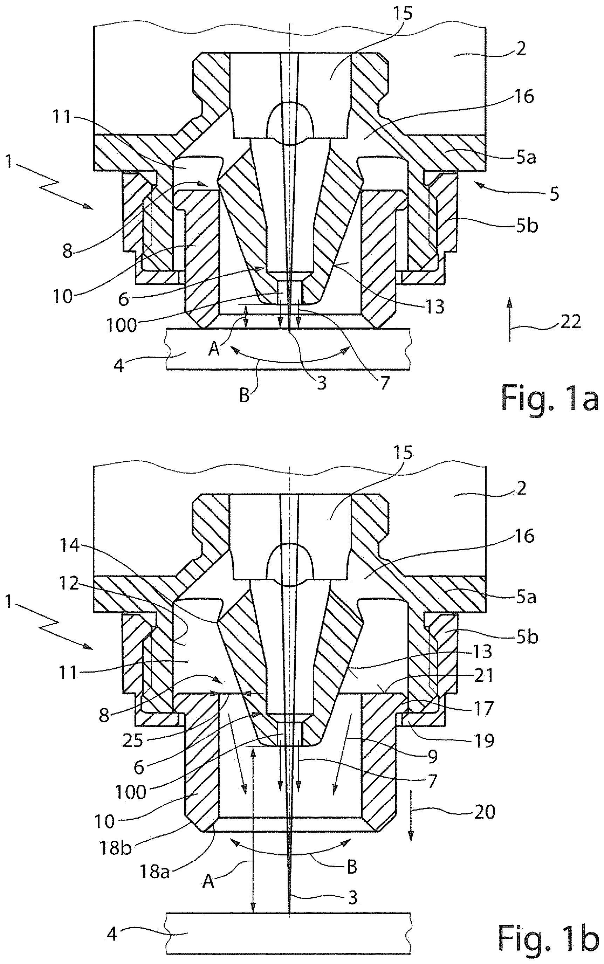

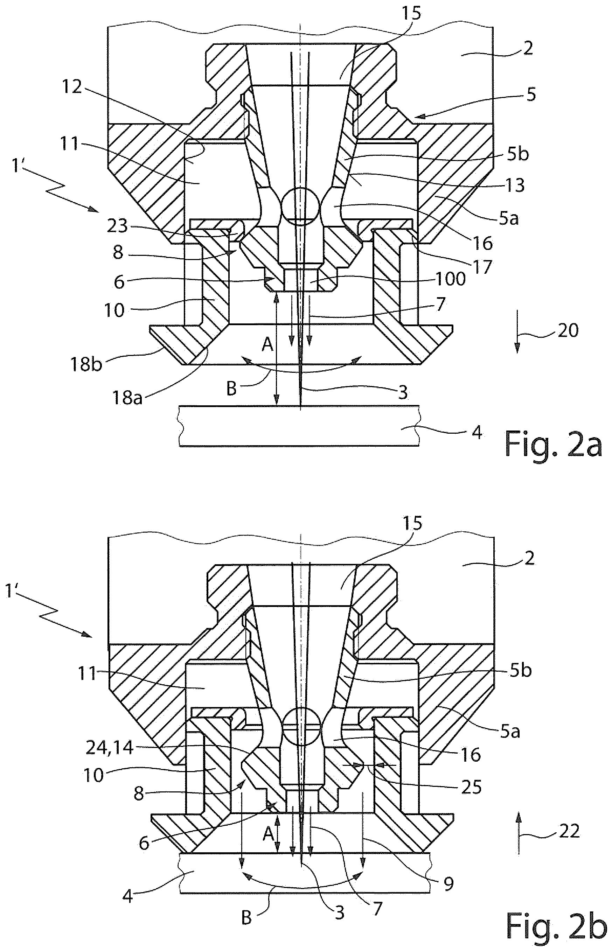

Die in **Fign. 1a, 1b** **und** **2a, 2b** gezeigten Schneidgasdüsen **1, 1'** sind an einem Laserbearbeitungskopf **2** angeordnet und dienen dazu, ein Schneidgas auf ein mittels eines Laserstrahls **3** bearbeitetes Werkstück (z.B. Blech) **4** zu richten. Solche Schneidgasdüsen 1, 1' können beispielsweise an einer Laserbearbeitungsmaschine, wie sie in der DE 10 2013 210 844 B3 offenbart ist, eingesetzt werden.

Die Schneidgasdüsen 1, 1' umfassen jeweils einen Düsenkörper **5** mit einer Austrittsöffnung **100** zum Durchtritt des Laserstrahls 3 auf das Werkstück 4, mit einer Innendüse **6** zur Ausbildung einer Kernströmung **7** und mit einer die Innendüse 6 umgebenden Ringspaltdüse **8** zur Ausbildung einer Ringströmung **9,** sowie eine über die Innendüse 6 vorstehende Ventilhülse **10,** die in dem Ringspalt **11** der Ringspaltdüse 8 axial verschiebbar zwischen zwei Stellungen geführt ist. Die bevorzugt als Keramikhülse ausgestaltete Ventilhülse 10 verschließt in der einen Stellung die Düsenquerschnittsfläche **25** der Ringspaltdüse 8 und gibt in der anderen Stellung die Düsenquerschnittsfläche 25 der Ringspaltdüse 8 frei. Die zumindest in einer Stellung über die Innendüse 6 vorstehende Ventilhülse 10 ist an der Außenwand **12** des Ringspalts 11 verschiebbar geführt. An der Innenwand **13** des Ringspalts 11, die durch die Außenseite der Innendüse 6 gebildet ist, ist ein Ventilsitz **14** ausgebildet, an dem die Ventilhülse 10 in ihrer die Ringspaltdüse 8 verschließenden Endstellung anliegt. Die Innendüse 6 ist über ihre zentrale Düsenbohrung **15** an eine Gaszufuhr (nicht gezeigt) angeschlossen. Der Ringspalt 11 ist über eine oder mehrere Verbindungsöffnungen **16** an die Düsenbohrung 15 angeschlossen. Der Laserstrahl 3 wird durch die Innendüse 6 auf das Werkstück 4 gerichtet.

Die Ventilhülse 10 ist mit einem eng tolerierten, außen umlaufenden Zentrierbund **17** ausgebildet, der an der Außenwand 12 des Ringspalts 11 verschiebbar und weitestgehend abgedichtet geführt ist. Ein mechanisches Spiel zwischen der Außenwand 12 des Ringspalts 11 und dem nach außen spitzen oder balligen Zentrierbund 17 ermöglicht eine Verkippung der Ventilhülse 10 innerhalb des Ringspalts 11 um ca. ±5° im Sinne des Doppelpfeils **B.** Auf diese Weise können beim Bewegen der Ventilhülse 10 auf dem Werkstück 4 Unebenheiten der Werkstückoberfläche ausgeglichen werden. Um über leichte Stufen in der Werkstückoberfläche, wie sie z.B. durch das Kippen freigeschnittener Werkstückteile auftreten können, ohne Beschädigung hinweg gleiten zu können, weist die vordere Stirnfläche der Ventilhülse 10 innen- und außenseitig jeweils eine umlaufende Anlaufschräge **18a, 18b** in Form einer Fase mit einem Fasenwinkel zwischen 30° und 60°, insbesondere mit einem Fasenwinkel von 45°, auf.

Bei der in Fign. 1a, 1b gezeigten Schneidgasdüse 1 umfasst der Düsenkörper 5 einen in den Laserbearbeitungskopf 2 eingeschraubten Hauptkörper **5a** (z.B. aus Kupfer), der die wahlweise eingeschraubte oder einstückig mit dem Hauptkörper 5a ausgebildete Innendüse 6 und die Ringspaltdüse 8 aufweist, sowie eine außen auf den Hauptkörper 5a aufgeschraubte Sicherungsmutter **5b** (z.B. aus Kupfer), die einen radial nach innen in den Ringspalt 11 vorstehenden Sicherungsrand **19** aufweist. Der Sicherungsrand 19 hält die Ventilhülse 10 unverlierbar im Ringspalt 11 und bildet einen Endanschlag, an dem die Ventilhülse 10 mit ihrem Zentrierbund 17 in ihrer vorderen Endstellung anliegt. Der Ventilsitz 14 ist durch die in Vorwärtsrichtung **20** der Ventilhülse 10 konisch zulaufende Innenwand 13 des Ringspalts 11 gebildet und bildet zusammen mit der Ventilhülse 10 ein Ringspaltventil.

In der in Fig. 1a gezeigten hinteren Endstellung der Ventilhülse 10 (Abstand **A** der Innendüse 6 zum Werkstück 4: ca. 0 bis 1 mm) sitzt die Ventilhülse 10 auf dem Werkstück 4 auf und liegt mit der Innenkante ihrer Hülsenbohrung auf dem Ventilsitz 14 dichtend an, wodurch das Ringspaltventil und damit die Düsenquerschnittsfläche 25 der Ringspaltdüse 8 verschlossen sind. Das aus dem Laserbearbeitungskopf 2 in die Schneidgasdüse 1 einströmende Schneidgas kann nur durch die zentrale (Düsen)Austrittsöffnung 100 der Innendüse 6 als Kernströmung 7 ausströmen. Diese Einlochdüse (Einkanaldüse) ist z.B. bei der Dünnblechbearbeitung erwünscht.

Wenn die Ventilhülse 10 aus ihrer hinteren Endstellung nach vorne geschoben wird, hebt sie vom Ventilsitz 14 ab, und das Ringspaltventil öffnet. Dabei entsteht mit zunehmendem Vorschieben der Ventilhülse 10 ein zunehmend breiterer Spalt zwischen Ventilhülse 10 und Innenwand 13, d.h. eine zunehmend breitere Düsenöffnung 25, so dass ein zunehmender Anteil des Schneidgases nicht mehr durch die Düsenaustrittsöffnung 100 der Innendüse 6, sondern über die Verbindungsöffnungen 16 in den Ringspalt 11 und von dort durch die Ringspaltdüse 8 als Ringströmung 9 ausströmt. Diese Nebenstromdüse (Mehrkanaldüse), bei der das Schneidgas sowohl aus der Innendüse 6 als auch aus der Ringspaltdüse 8 ausströmt, ist vor allem beim Schneiden dicker Werkstücke erwünscht. In Fig. 1b ist die Ventilhülse 10 in ihrer vorderen Endstellung gezeigt, wobei der Abstand A der Innendüse 6 zum Werkstück 4 um mindestens den Verschiebeweg der Ventilhülse 10 zwischen ihren beiden Endstellungen größer als in der hinteren Endstellung ist.

Die hintere Stirnfläche **21** der Ventilhülse 10 ist wegen des Zentrierbundes 17 deutlich größer als die vordere Stirnfläche, gebildet aus der Teilfläche 18a, so dass die Druckdifferenz zwischen dem Düseninneren und der Umgebung das Vorschieben der Ventilhülse 10 in Vorwärtsrichtung 20 und bei bereits auf der Werkstückoberfläche aufgesetzter Ventilhülse 10 eine Anpresskraft der Ventilhülse 10 auf die Werkstückoberfläche bewirkt, die proportional zum Schneidgasdruck ist. Durch diese druckproportionale, pneumatische Anfederung der Ventilhülse 10 wird ein Abheben der Ventilhülse 10 von der Werkstückoberfläche sicher verhindert. Das Zurückschieben der Ventilhülse 10 in Rückwärtsrichtung **22** erfolgt durch unterschiedlich weites Absenken der Schneidgasdüse 1 zum Werkstück 4, wodurch die Ventilhülse 10 auf der Werkstückoberfläche aufsetzt und dann in Rückwärtsrichtung 22 zurückgeschoben wird.

Bei der in Fign. 2a, 2b gezeigten Schneidgasdüse **1'** umfasst der Düsenkörper 5 einen in den Laserbearbeitungskopf 2 einschraubbaren äußeren Düsenkörper 5a (z.B. aus Kupfer), der die Außenwand 12 des Ringspalts 11 bildet, und einen in den äußeren Düsenkörper 5a eingeschraubten, eingepressten oder eingeklebten inneren Düsenkörper 5b (z.B. aus Kupfer), der die Innendüse 6 aufweist und dessen Außenseite die Innenwand 13 des Ringspalts 11 bildet. Der Ventilsitz 14 ist durch einen in Rückwärtsrichtung 22 konisch zulaufenden vorderen Wandabschnitt 24 der Innenwand 13 gebildet und wirkt mit einer als Absatz geformten Innenkontur der Ventilhülse 10 oder mit einem Dichtring **23** zusammen, der an der hinteren Stirnseite der Ventilhülse 10 befestigt ist und den Ventilsitz 14 in Vorwärtsrichtung 20 hintergreift. Der Dichtring 23 bzw. der Absatz der Ventilhülse 10 hält die Ventilhülse 10 unverlierbar im Ringspalt 11. Der Ventilsitz 14 bildet zusammen mit der Ventilhülse 10 ein Ringspaltventil.

In der in Fig. 2a gezeigten vorderen Endstellung der Ventilhülse 10 ist die Ventilhülse 10 vom Werkstück **4** beabstandet und liegt mit dem Dichtring 23 auf dem Ventilsitz 14 dichtend an, wodurch das Ringspaltventil und damit die Düsenquerschnittsfläche 25 der Ringspaltdüse 8 verschlossen sind. Das aus dem Laserbearbeitungskopf 2 in die Schneidgasdüse 1' einströmende Schneidgas kann nur durch die zentrale Düsenaustrittsöffnung 100 der Innendüse 6 als Kernströmung 7 ausströmen. Diese Einlochdüse (Einkanaldüse) ist beim Einstechen des Laserstrahls 3 in das Werkstück 4 oder bei der Dünnblechbearbeitung erwünscht, wenn der Laserbearbeitungskopf 2 und damit die Innendüse 6 einen großen Abstand zur Werkstückoberfläche aufweisen.

Wenn die Ventilhülse 10 aus ihrer vorderen Endstellung durch ein Absenken des Bearbeitungskopfes 2 in Richtung Werkstückoberfläche 4 in Rückwärtsrichtung 22 in die in Fig. 2b gezeigte Stellung zurückgeschoben wird, hebt sie vom Ventilsitz 14 ab, und das Ringspaltventil öffnet, so dass das Schneidgas über die Verbindungsöffnungen 16 auch in den Ringspalt 11 und von dort durch die Düsenquerschnittsfläche 25 der Ringspaltdüse 8 als Ringströmung 9 ausströmt. Diese Nebenstromdüse (Mehrkanaldüse), bei der das Schneidgas sowohl aus der Düsenaustrittsöffnung 100 der Innendüse 6 als auch aus der Ringspaltdüse 8 ausströmt, ist vor allem beim Schneiden dicker Werkstücke erwünscht. In Fig. 2b ist die Ventilhülse 10 in Anlage am Werkstück 4 gezeigt, wobei der Abstand A der Innendüse 6 zum Werkstück 4 um den Verschiebeweg der Ventilhülse 10 kleiner als in der vorderen Endstellung der auf dem Werkstück 4 aufgesetzten Hülse ist.

Die Ventilhülse 10 ist im gezeigten Beispiel so aufgebaut, dass sich im Betrieb unabhängig vom absoluten Gasdruckniveau die durch den Schneidgasdruck auf die Ventilhülse 10 wirkenden Auftriebs- und Anpresskräfte gerade die Waage halten, so dass die Ventilhülse 10 weitgehend reibungsfrei, aber trotzdem ständig flächig aufliegend über die (ebene) Werkstückoberfläche gleitet. Erreicht wird dies dadurch, dass derjenige Oberflächenteil der Ventilhülse 10, auf den der Schneidgasdruck in Vorwärtsrichtung 20 wirkt, gleich groß ist wie derjenige Oberflächenteil der Ventilhülse 10, auf den der Schneidgasdruck in Rückwärtsrichtung 22 wirkt. Im gezeigten Beispiel ist die durch Ventilhülse 10 und Dichtring 21 gebildete hintere Stirnfläche gleich groß wie die durch die innere Anlaufschräge 18a gebildete vordere Stirnfläche (in der Projektion), die bei auf das Werkstück 4 aufgesetzter Ventilhülse 10 mit Schneidgasdruck beaufschlagt ist. Das Vorschieben der Ventilhülse 10 in Vorwärtsrichtung 20 erfolgt bei nicht auf das Werkstück 4 aufgesetzter Ventilhülse 10 durch den Schneidgasdruck. Das Zurückschieben der Ventilhülse 10 in Rückwärtsrichtung 22 erfolgt durch unterschiedlich weites Absenken der Schneidgasdüse 1 zum Werkstück 4, wodurch die Ventilhülse 10 auf der Werkstückoberfläche aufsetzt und in Rückwärtsrichtung 22 zurückgeschoben wird. Durch eine gezielte Änderung dieser Flächenverhältnisse kann ein definierter Schwebezustand der Ventilhülse 10 über dem Werkstück 4 unabhängig vom aktuellen Gasdruck erzielt werden, um so beispielsweise eine kratzerfreie Schneidbearbeitung zu ermöglichen.

Wenn nach dem Einstechen Ablagerungen aus Schlacke und erstarrten Metallspritzern auf der Werkstückoberfläche anhaften, so muss auf dem Weg des Laserstrahls 3 vom Einstechloch zum Beginn der eigentlichen Schneidkontur ein Bereich überwunden werden, welcher aufgrund der Verschmutzung der Werkstückoberfläche nicht dazu geeignet ist, die Ventilhülse 10 schon dort bündig auf das Werkstück 4 aufzusetzen. In diesem Übergangsbereich (genannt "Vorschnitt") zwischen Einstechposition und eigentlicher Schneidkontur wirkt sich die Möglichkeit zur NC-gesteuerten Umschaltung der Düsencharakteristik ebenfalls vorteilhaft aus: Im Bereich des Vorschnitts ist die Düsencharakteristik einer Einlochdüse (Einkanaldüse) günstiger für einen stabilen Schneidprozess, während beim Erreichen der eigentlichen Bauteilkontur auf die Nebenstrom-(Mehrkanal)-Charakteristik umgeschaltet werden kann, wenn dies für das Schneiden dicker Werkstücke günstiger ist.

Die Schneidgasdüse 1' weist beim Einstechen mit großem Abstand dieselben Eigenschaften auf wie eine klassische Einlochdüse (Einkanaldüse). Es wird daher keine zusätzliche Datenermittlung für Einstech-Prozessparameter erforderlich. Durch den kompakten Gasstrahl beim Einstechen, der nur durch die zentrale Öffnung 100 der Innendüse 6 austreten kann, ist die Schneidgasdüse 1' bestmöglich vor Verschmutzung durch Spritzer oder Rauch geschützt ist. Die Flugbahn und das Abkühlverhalten von Metallspritzern, welche aus dem Einstechloch herausgeschleudert werden, werden bestmöglich beeinflusst, so dass ein möglichst spritzerfreies Einstechen erreicht wird.

Die nahezu gasdichte Kapselung des Bereichs zwischen der Schneidgasdüse 1, 1' und der Werkstückoberfläche bei aufgesetzter Schneidgasdüse 1, 1'
- minimiert die Gasmenge, welche nicht in den Schneidspalt eindringt (= Nutzprozess), sondern horizontal über die Blechoberfläche aus der Prozesszone abströmt (= Verlustprozess),
- minimiert hierdurch den maschinenseitig maximal bereitzustellenden Schneidgasdruck bzw. die notwendige, maximale Schneidgasdurchflussmenge,
- minimiert die durch die Schneidgasdüse 1, 1' generierte Schallemission,
- ermöglicht durch die verbesserte Einkopplung des Schneidgases in den Schnittspalt bei gegebenen, maschinenseitigen Maximalgasdrücken das Schneiden noch größerer Blechdicken, und
- verhindert eine schädliche Vermischung des Schneidgases (z.B. hochreiner Sauerstoff) durch mit in den Schneidspalt eingesaugte Umgebungsluft.

Die "schwimmende" Kipplagerung der Ventilhülse 10 im Düsenkörper 5 erlaubt im laufenden Schneidbetrieb
- die NC-gesteuerte Variation des Düse-Blech-Abstandes A und dadurch
- die gezielte Veränderung der Strömungsverteilung innerhalb der Ventilhülse 10 und dadurch den flexiblen Einsatz der Schneidgasdüse 1, 1' sowohl als klassische Einlochdüse (Einkanaldüse) wie auch als verbrauchsminimierte Nebenstromdüse (Mehrkanaldüse),
- die automatische Kompensation unebener Werkstückoberflächen ohne Veränderung der Schneidgasdynamik und damit auch ohne Veränderung des Schneidergebnisses.

Statt wie gezeigt konisch kann der Ventilsitz 14 auch als ebener Ringabsatz, insbesondere am Grund des Ringspalts 11 gebildet sein.

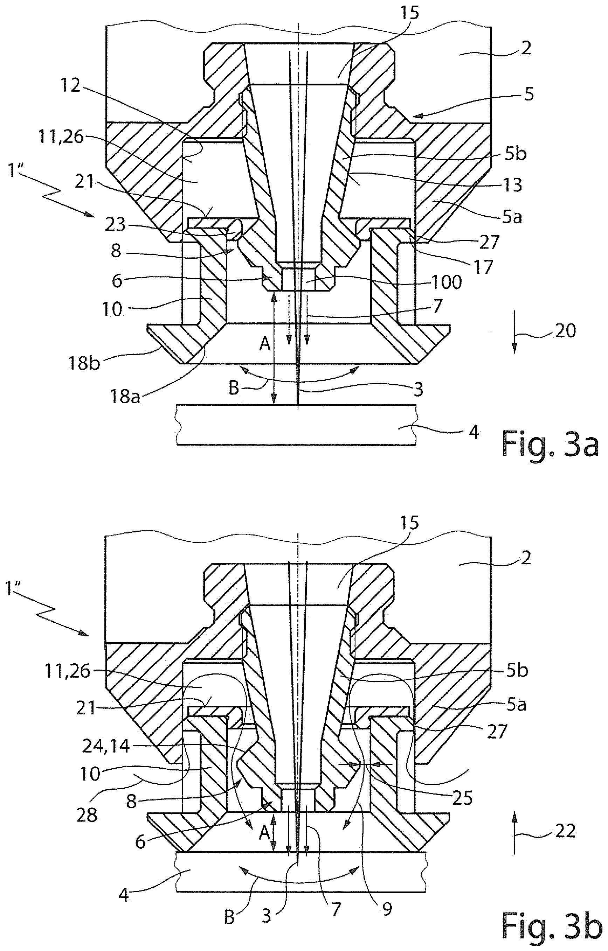

Von der Schneidgasdüse 1' der Fig. 2 unterscheidet sich die in **Fign. 3a, 3b** gezeigte Schneidgasdüse **1"** dadurch, dass die Düsenbohrung 15 der Innendüse 6 und der Ringspalt 11 der Ringspaltdüse 8 nicht miteinander verbunden sind, also keine Verbindungsbohrungen vorhanden sind, und dass ein zwischen der hinteren Stirnfläche 21 der Ventilhülse 10 und dem Düsenkörper 5 vorhandener Ringraum **26** über einen zwischen Düsenkörper 5 und Ventilhülse 10 vorhandenen Führungsspalt **27** mit der Außenumgebung verbunden ist. Auf die bei den Schneidgasdüsen 1, 1' gewünschte Abdichtung des Außendurchmessers der Ventilhülse 10 bzw. ihres Zentrierbundes 17 gegenüber der Umgebungsatmosphäre wird somit gezielt verzichtet.

Das Verhältnis zwischen hinterer und vorderer Hülsenstirnfläche ist so gewählt, dass die im Schneidbetrieb auf die Ventilhülse 10 wirkenden Gasdruckkräfte unabhängig vom verwendeten Schneidgasdruck einen definierten Schwebezustand der Ventilhülse 10 bewirken, so dass durch den definiert und reproduzierbar einstellbaren Spalt zwischen vorderer Hülsenstirnfläche und Werkstückoberfläche ein ausreichend hoher Verlustgasstrom aus der Ventilhülse 10 entweicht.

Alternativ hierzu kann auch durch das gezielte Einbringen von Gasabströmkanälen in die Hülsenstirnfläche oder auch von Gasabströmbohrungen in den zylindrischen Teil der Hülse ein ausreichend hoher Verlustgasstrom erzielt werden.

Wird die Schneidgasdüse 1" - ausgehend von ihrer in Fig. 3a gezeigten geschlossenen Ventilstellung - mit einem zunehmend geringeren Innendüsenabstand A zum Werkstück 4 betrieben, so hebt die Ventilhülse 10 vom Ventilsitz 14 ab und das Ringspaltventil öffnet zunehmend (Fig. 3b). Durch den Venturi-Effekt des aus der Innendüse 6 strömenden Schneidgases wird (zunehmend mehr) Luft (und damit Sauerstoff) **28** über den Führungsspalt 27 aus der Außenumgebung als Ringströmung 9 angesaugt, die sich innerhalb der Ventilhülse 10 mit dem Stickstoff-Schneidgas-strahl vermischt. Abhängig vom Innendüsenabstand A zum Werkstück 4 lässt sich auf diese Weise ein Fremdgasanteil in dem als Schneidgas genutzten Stickstoffstrom durch Sauerstoff aus der Umgebung gezielt einstellen. Die Schneidgasdüse 1" wirkt also als einstellbare Gasmischdüse. Über die richtige Wahl des Innendüsenabstands A zum Werkstück 4 kann eine Anpassung des resultierenden Sauerstoffanteils im Schneidgas an die Erfordernisse das aktuellen Schneidprozesses (abhängig von z.B. Laserleistung, Blechdicke, Walzhaut-Oberflächeneigenschaften) reproduzierbar und einstellbar erfolgen.

Mit Hilfe einer solchen einstellbaren Gasmischdüse können beispielsweise beim Schneiden von Aluminium mit CO2-Laserstrahlung die Prozesseffizienz und -stabilität durch eine gesteuerte Beimischung von ca. 0,5-2% Sauerstoff aus der Umgebung in den hochreinen Stickstoff-Schneidgasstrahl gesteigert werden. Durch die Anwesenheit des geringen Prozentsatzes an Sauerstoff werden im Schneidprozess eine Erhöhung des Absorptionsgrades sowie eine Herabsetzung der Schmelzviskosität erzielt.

Soll keine Beimischung von Umgebungsluft erfolgen, so muss der Innendüsenabstand A zum Werkstück 4 so weit vergrößert werden, dass die Ventilhülse 10 auf dem konischen Ventilsitz 14 aufsetzt und so der Ringspalt 11 verschlossen wird (Fig. 3a). Auf diese Weise wird das Einkoppeln des hochreinen Schneidgasstrahls in den Schneidspalt mit minimaler Kontamination durch die Umgebungsatmosphäre ermöglicht. Dies ist vorteilhaft beispielsweise für das Schneiden oxidfreier Bauteile.

In einer weiteren, nicht gezeigten Variante kann die Gasdüse alternativ so ausgeführt sein, dass die Düsenbohrung 15 der Innendüse 6 und der Ringspalt 11 der Ringspaltdüse 8 nicht miteinander verbunden sind, also keine Verbindungsbohrungen vorhanden sind, und dass der zwischen der hinteren Stirnfläche 21 der Ventilhülse 10 und dem Düsenkörper 5 vorhandener Ringraum 26 nicht mit der Außenumgebung verbunden ist. In dieser Variante wirkt die Gasdüse immer als Einkanaldüse. Eine Variation der Strömungsverhältnisse ist mit einer solchen Gasdüse nicht möglich, aber die Einkopplung des Schneidgases in den Schneidspalt bzw. die Wirkung eines Schutzgases beim Schweißen wird verbessert.

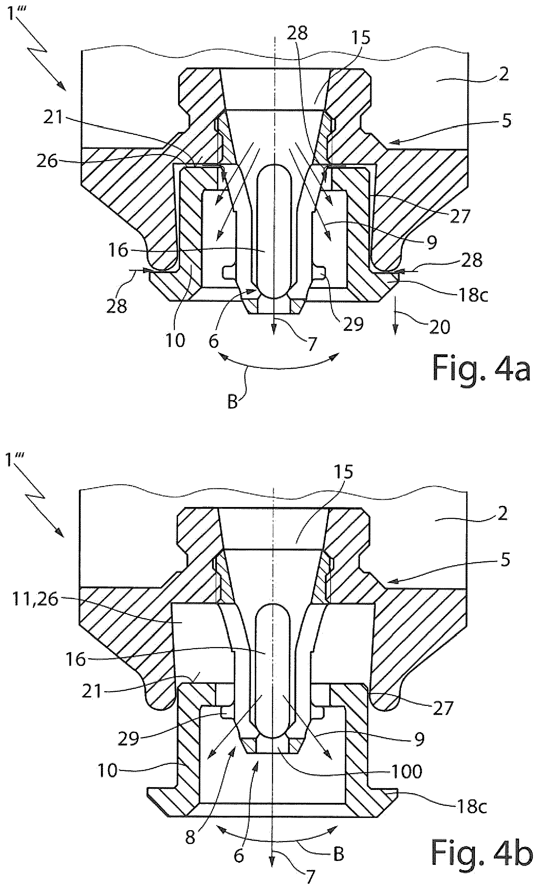

Von der Schneidgasdüse 1' der Fig. 2 unterscheidet sich die in **Fign. 4a, 4b** gezeigte Schneidgasdüse **1'"** dadurch, dass die Verbindungsöffnungen 16 als axiale Langlöcher ausgebildet sind, die in der hinteren Endstellung (Fig. 4a) bis zur vorderen Endstellung (Fig. 4b) der Hülse 10 die Düsenbohrung 15 der Innendüse 6 und den Ringspalt 11 der Ringspaltdüse 8 miteinander verbinden, und dass in der hinteren Endstellung der Hülse 10 zwischen der hinteren Stirnfläche 21 der Hülse 10 und dem Düsenkörper 5 ein Ringraum 26 verbleibt, der über einen zwischen Düsenkörper 5 und Hülse 10 vorhandenen Führungsspalt 27 mit der Außenumgebung verbunden ist. Durch die Verbindungslöcher 16 und durch den in jeder Hülsenstellung vorhandenen Ringraum 26 ist es möglich, die Hülse 10 aus einer vorgeschobenen Stellung durch eine gezielte Wahl des Gasdrucks in Rückwärtsrichtung 22 bis in ihre hintere Endstellung zu saugen. Die hintere Endstellung der Hülse 10 ist entweder durch Anlage der hinteren Hülsenstirnfläche an der konischen Außenseite der Innendüse 6 oder durch Anlage des vorderen Hülsenrands **18c** am Düsenkörper 5 definiert.

Anders als die Schneidgasdüsen 1, 1', 1" weist die Hülse 10 der Schneidgasdüse 1'" keinen nach außen spitzen oder balligen Zentrierbund auf, sondern hier verjüngt sich die Außenwand 12 des Ringspalts 11, gebildet durch die Innenwand des Hauptkörpers 5a des Düsenkörpers 5, in Vorwärtsrichtung 20 konisch, um das Verkippen der Hülse 10 innerhalb des Ringspalts 11 um ca. ±5° zu ermöglichen. Alternativ oder zusätzlich kann sich auch die Hülsenwand außenseitig in Rückwärtsrichtung 22 insbesondere konisch verjüngen.

Die Schneidgasdüse 1'" arbeitet dabei wie folgt:
Beim Einschalten des Schneidgasstroms wird zunächst ein Unterdruck im Ringraum 26 bzw. auf der hinteren Stirnfläche 21 der Hülse 10 erzeugt, durch den diese in den Düsenkörper 5 hinein bis in die hintere Endstellung gezogen wird, auch wenn die Hülse 10 keinen Kontakt zur Werkstückoberfläche hat. Bleibt der Gasdruck des Schneidgases kleiner als ein durch das Gewicht der Hülse 10 vorgegebener Grenzdruck (z.B. 3 bar), so bleibt die Hülse 10 eingesaugt. Dieser Zustand ist nutzbar zum Schutz der Hülse 10 vor Beschädigung oder Verschmutzung z.B. beim Einstechen, beim Einsatz der Düse zum Gravieren oder Kennzeichnen des Werkstücks oder bei der Düsenreinigung durch Bürsten - d.h. besonders bei Verfahren, bei denen mit großem Düsenabstand zum Werkstück 4 gearbeitet wird, aber trotzdem die Hülse 10 im Düsenkörper 5 in der hinteren Endstellung verbleiben soll.

Wird der Gasdruck über den Grenzdruck erhöht, so strömt das Schneidgas zunehmend turbulent durch den Ringspalt 11 zwischen Innendüse 6 und Ventilhülse 10, wodurch die nach vorne gerichtete Kraftwirkung des Schneidgases ebenfalls zunimmt, so dass die Ventilhülse 10 durch das Schneidgas in Vorwärtsrichtung 20 gedrückt wird. Dieser Zustand wird beim Schneiden des Werkstücks 4 eingestellt, so dass die Hülse 10 Kontakt zur Werkstückoberfläche hat. Dies verhindert wirkungsvoll ein seitliches Abströmen des Schneidgases und ein Einsaugen von Umgebungsluft in den Schneidspalt. Auf diese Weise wird der Gasverbrauch reduziert und im Schneidspalt eine genau definierte Gaszusammensetzung erhalten, wodurch die Qualität der erhaltenen Schneidkanten signifikant verbessert wird. Zum erneuten Einsaugen der Hülse 10 nach dem Schneidbetrieb muss der Gasdruck am Eingang 15 des Düsenkörpers 5 zunächst auf fast 0 bar reduziert oder ganz abgeschaltet werden. Ein erneutes Anheben des Gasdrucks auf knapp unterhalb den Grenzdruck bewirkt dann das Einsaugen der sich schwerkraftbedingt in ihrer vorderen Endstellung an Vorsprüngen **29** des Düsenkörpers 5 befindlichen Hülse 10 in ihre hintere Endstellung. Bei einem konstanten Gasdruck von unter dem Grenzdruck verbleibt die Hülse 10 permanent in ihrer hinteren Endstellung im Düsenkörper 5

Statt wie in den Fign. 3 und 4 gezeigt über den Führungsspalt 27, kann Luft aus der Außenumgebung auch über eine Bohrung (nicht gezeigt) im Düsenkörper 5 angesaugt werden, die den Ringraum 26 mit der Außenumgebung verbindet.

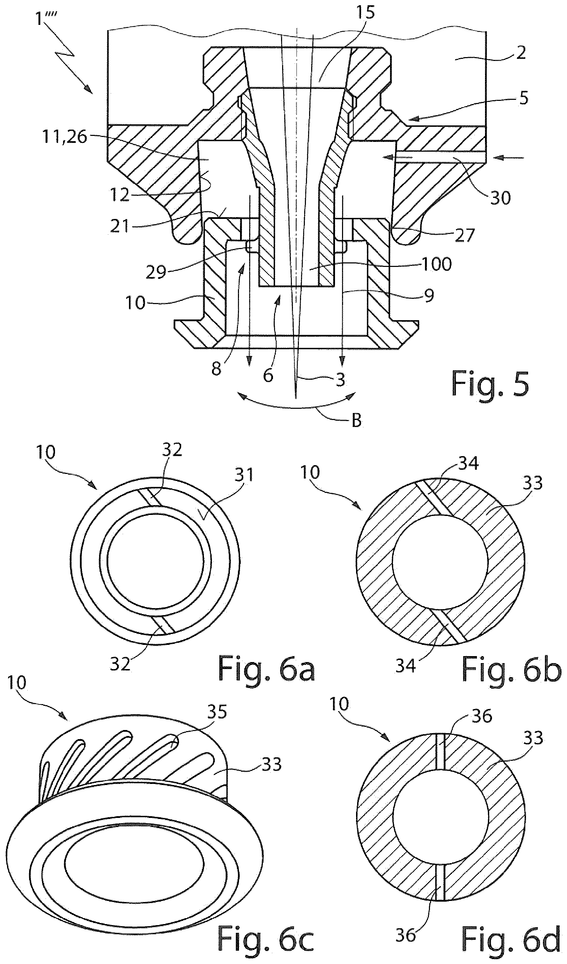

Im Unterschied zur Schneidgasdüse 1'" der Fig. 4 weist die in **Fig. 5** gezeigte Gasdüse **1""** keine Verbindungsöffnungen zwischen der Düsenbohrung 15 und Ringspalt 11 auf, und nur der Laserstrahl 3 tritt durch die Strahlaustrittsöffnung 100 der Innenkontur 6 in Richtung auf das Werkstück aus. Über eine Zuleitung **30** im Düsenkörper 5 wird Prozess- oder Schutzgas dem Ringraum 26 zugeführt. Aus dem Ringraum 26 tritt es dann durch die Düsenquerschnittsfläche 25 in die Hülse 10 ein und aus der Hülse 10 als Ringströmung 9 aus. Eine solche Düse 1"" eignet sich besonders für Schweißprozesse.

In **Fign. 6a-6d** sind verschiedene Modifikationen der Hülse 10 gezeigt.

Weist die Hülse 10 in ihrer vorderen Stirnfläche **31** mehrere, hier beispielhaft zwei, schräg zur Radialrichtung oder spiralförmig verlaufende Nuten **32** (Fig. 6a) oder in ihrer zylindrischen Hülsenwand **33** mehrere, hier beispielhaft zwei, schräg zur Radialrichtung verlaufende Bohrungen **34** (Fig. 6b) auf, so wird die Hülse 10 durch das in den Nuten 32 oder Bohrungen 34 von innen nach außen ausströmende Schneidgas in eine Rotation versetzt. Die Nuten 32 können sehr schmal und flach ausgeführt sein, so dass lediglich ein geringer Bruchteil des Schneidgases durch die Nuten 32 in die Umgebung abströmt. Durch die schräge bzw. spiralförmige Ausrichtung der Nuten 32 und der Bohrungen 34 übt der Impuls des abströmenden Schneidgases ein Drehmoment auf die Ventilhülse 10 aus, die dadurch in Rotation versetzt wird. Alternativ können in der zylindrischen Hülsenwand 31 außenseitig auch mehrere schräg zur Axialrichtung verlaufende Nuten **35** (Fig. 6c) vorhanden sein, so dass die Ventilhülse 10 durch die axial im Führungsspalt 27 strömende Luft 28 bzw. das Prozess- oder Schutzgas in Rotation versetzt wird. Zusätzlich zu den rotationsverursachenden Strukturen kann die Ventilhülse 10 in ihrer zylindrischen Hülsenwand 31 ein oder mehrere dünne Löcher **36** aufweisen.

Die Rotation der Hülse 10 kann wie folgt vorteilhaft genutzt werden:
Wenn die Hülse 10 aus einem hoch abriebfesten Werkstoff, wie z.B. einer Oxidkeramik (Al2O3), hergestellt ist, kann die Hülse 10 mit ihrer vorderen Stirnfläche 31 - wie bei einem Dreh- oder Fräswerkzeug - in gewissem Umfang Verunreinigen der Werkstückoberfläche durch einen Impulsübertrag abtragen. Wenn sich die Hülse 10 in ständigem mechanischen Kontakt mit der Werkstückoberfläche befindet (Hülse 10 rotiert), dann können flächige Verunreinigungen, wie z.B. Öl- oder Zunderschichten, Färb- oder Klebstoffreste, Schmauchspuren, Metallperlen o.ä., entfernt werden. Durch den direkten mechanischen Kontakt kann die keramische Hülse 10 allerdings Kratzspuren auf der Werkstückoberfläche hinterlassen. Durch die Rotation der Hülse 10 werden außerdem die Haftreibung zwischen Hülse 10 und Werkstückoberfläche und der Verschleiß der Hülse 10 durch lokale Erwärmung vermindert.

Weist die Hülse 10 geometrische Strukturen, wie z. B. Nuten 32, in ihrer Stirnfläche 31 (Fig. 6a) oder Bohrungen 34, 36 in der Hülsenwand 33 (Fig. 6b,d) auf, durch die ein geringer Teil des Prozessgases lokal begrenzt aus dem Innenraum der Hülse 10 in die Umgebung ausströmen kann, so ermöglicht die Rotation der Hülse 10 eine gezielte Modulation des Prozessgasdrucks in der unter der Hülse 10 befindlichen Prozesszone (am Werkstück 4). Diese gezielt erzeugten Druckschwankungen wirken sich z. B. beim Laserschneiden positiv auf die Qualität der erzeugten Schneidkanten des Werkstücks 4 aus.

Statt aus Keramik kann die Hülse 10 auch aus Kunststoff gefertigt sein, der nicht so temperaturbeständig sein muss wie Keramik. Die besseren Gleiteigenschaften von Kunststoff haben den Vorteil, dass bei der Bewegung der Hülse 10 über das Werkstück die Bildung von Kratzern auf der Werkstückoberfläche vermindert oder ganz vermieden werden kann.

## Patentansprüche

1. Gasdüse (1; 1'; 1"; 1'") für einen Laserbearbeitungskopf (2), mit einer Austrittsöffnung (100) zum Durchtritt eines Laserstrahls (3) auf ein Werkstück (4), mit einem die Austrittsöffnung (100) umgebenden Ringspalt (11) und mit einer in dem Ringspalt (11) angeordneten Hülse (10), die in dem Ringspalt (11) axial verschiebbar zwischen einer hinteren und einer vorderen Stellung geführt ist und die zumindest in der vorderen Stellung über die Austrittsöffnung (100) vorsteht,
**dadurch gekennzeichnet,**
**dass** die Hülse (10) im Ringspalt (11) verkippbar gelagert ist.

2. Gasdüse nach Anspruch 1, **dadurch gekennzeichnet, dass** die Hülse (10) einen außen umlaufenden, spitzen oder balligen Zentrierbund (17) aufweist, der an der Außenwand (12) des Ringspalts (11) verschiebbar geführt und verkippbar gelagert ist.

3. Gasdüse nach Anspruch 1 oder 2, **dadurch gekennzeichnet, dass** sich die Außenwand (12) des Ringspalts (11) in Vorwärtsrichtung (20) und/oder die Hülsenwand außenseitig in Rückwärtsrichtung (20), insbesondere konisch, verjüngen.

4. Gasdüse nach einem der vorhergehenden Ansprüche, **dadurch gekennzeichnet, dass** die Austrittsöffnung (100) durch eine Düsenaustrittsöffnung einer Innendüse (6) zum Richten einer Kernströmung (7) auf das Werkstück (4) ausgebildet ist.

5. Gasdüse nach einem der vorhergehenden Ansprüche, **dadurch gekennzeichnet, dass** der Ringspalt (11) in einer Ringspaltdüse (8) zum Richten einer ringförmigen Gasströmung (9) auf das Werkstück (4) ausgebildet ist und dass die Hülse (10) die Düsenquerschnittsfläche (25) der Ringspaltdüse (8) in den beiden Stellungen unterschiedlich weit freigibt, wobei bevorzugt die Hülse (10) in ihrer einen Stellung die Ringspaltdüse (8) zumindest weitgehend, insbesondere vollständig, verschließt und in ihrer anderen Stellung die Ringspaltdüse (8) freigibt.

6. Gasdüse nach Anspruch 4 und 5, **dadurch gekennzeichnet, dass** die Innendüse (6) und die Ringspaltdüse (8) in einem Düsenkörper (5) ausgebildet sind und dass die Düsenbohrung (15) der Innendüse (6) und der Ringspalt (11) der Ringspaltdüse (8) über mindestens eine Verbindungsöffnung (16) miteinander verbunden sind.

7. Gasdüse nach Anspruch 6, **dadurch gekennzeichnet, dass** in der hinteren Stellung der Hülse (10) zwischen der hinteren Stirnfläche (21) der Hülse (10) und dem Düsenkörper (5) ein Ringraum (26) verbleibt, der, insbesondere über einen zwischen Düsenkörper (5) und Hülse (10) vorhandenen Führungsspalt (27), mit der Außenumgebung verbunden ist, und dass die mindestens eine Verbindungsöffnung (16) als eine sich bis in den Ringraum (26) erstreckende Öffnung ausgebildet ist.

8. Gasdüse nach Anspruch 4 und 5, **dadurch gekennzeichnet, dass** die Innendüse (6) und die Ringspaltdüse (8) in einem Düsenkörper (5) ausgebildet sind, wobei die Düsenbohrung (15) der Innendüse (6) und der Ringspalt (11) der Ringspaltdüse (8) nicht miteinander verbunden sind, und dass ein zwischen der hinteren Stirnfläche (21) der Hülse (10) und dem Düsenkörper (5) vorhandener Ringraum (26), insbesondere über einen zwischen Düsenkörper (5) und Hülse (10) vorhandenen Führungsspalt (27), mit der Außenumgebung verbunden ist.

9. Gasdüse nach einem der vorhergehenden Ansprüche, **dadurch gekennzeichnet, dass** derjenige Oberflächenteil der Hülse (10), auf den der Gasdruck in einer Vorwärtsrichtung (20) wirkt, größer ist als derjenige Oberflächenteil der Hülse (10), auf den der Gasdruck in einer Rückwärtsrichtung (22) wirkt, oder dass derjenige Oberflächenteil der Hülse (10), auf den der Gasdruck in einer Vorwärtsrichtung (20) wirkt, gleich groß oder kleiner ist als derjenige Oberflächenteil der Hülse (10), auf den der Gasdruck in einer Rückwärtsrichtung (22) wirkt.

10. Gasdüse nach einem der vorgehenden Ansprüche, **dadurch gekennzeichnet, dass** die Innenwand (13) des Ringspalts (11) durch die Wandung der Austrittsöffnung (100) gebildet ist.

11. Gasdüse nach einem der vorgehenden Ansprüche, **dadurch gekennzeichnet, dass** die Hülse (10) an der Außenwand (12) des Ringspalts (11) verschiebbar geführt ist.

12. Gasdüse nach einem der vorhergehenden Ansprüche, **dadurch gekennzeichnet, dass** die vordere Stirnfläche der Hülse (10) innen- und/oder außenseitig eine Anlaufschräge (18a, 18b) aufweist.

13. Gasdüse nach einem der vorgehenden Ansprüche, **dadurch gekennzeichnet, dass** die Hülse (10) aus Keramik oder einem vergleichbar temperaturbeständigen und elektrisch nichtleitenden Material oder einem bis mindestens 100 °C temperaturbeständigen Kunststoff gebildet ist.

14. Gasdüse nach einem der vorgehenden Ansprüche, **dadurch gekennzeichnet, dass** die Hülse (10) in ihrer vorderen Stirnfläche (31) mindestens eine, bevorzugt mehrere schräg zur Radialrichtung verlaufende Nuten (32) oder in ihrer Hülsenwand (33) mindestens eine, bevorzugt mehrere schräg zur Radialrichtung verlaufende Bohrungen (34) aufweist.

15. Gasdüse nach einem der vorgehenden Ansprüche, **dadurch gekennzeichnet, dass** die Hülse (10) in ihrer Hülsenwand (33) außenseitig mindestens eine, bevorzugt mehrere schräg zur Axialrichtung verlaufende Nuten (35) und/oder in ihrer Hülsenwand (31) mindestens eine, bevorzugt mehrere Bohrungen (36) aufweist.

## Claims

1. A gas nozzle (1; 1'; 1"; 1'") for a laser machining head (2), comprising an exit opening (100) for the passage of a laser beam (3) onto a workpiece (4), an annular gap (11) surrounding the exit opening (100), and a sleeve (10) that is disposed in the annular gap (11) and is guided in the annular gap (11) so as to be axially displaceable between a rearward and a forward position, and said sleeve (10) at least in the forward position projecting beyond the exit opening (100),
**characterized in that**
the sleeve (10) is tiltably mounted in the annular gap (11).

2. The gas nozzle as claimed in claim 1, **characterized in that** the sleeve (10) has an externally encircling pointed or spherical centering bead (17) which is displaceably and tiltably mounted on the external wall (12) of the annular gap (11).

3. The gas nozzle as claimed in claim 1 or 2, **characterized in that** the external wall (12) of the annular gap (11) tapers, in particular in a conical manner, in the forward direction (20), and/or the sleeve wall on the external side tapers, in particular in a conical manner, in the reverse direction (20).

4. The gas nozzle as claimed in one of the preceding claims, **characterized in that** the exit opening (100) is formed by a nozzle exit opening of an inner nozzle (6) for directing a core flow (7) onto the workpiece (4).

5. The gas nozzle as claimed in one of the preceding claims, **characterized in that** the annular gap (11) is formed in an annular gap nozzle (8) for directing an annular gas flow (9) onto the workpiece (4), and **in that** the sleeve (10) in the two positions opens the nozzle cross-sectional area (25) of the annular gap nozzle (8) to a different degree, wherein the sleeve (10) in the one position thereof preferably closes the annular gap nozzle (8) at least largely, in particular completely, and in the other position thereof opens the annular gap nozzle (8).

6. The gas nozzle as claimed in claims 4 and 5, **characterized in that** the inner nozzle (6) and the annular gap nozzle (8) are formed in a nozzle body (5), and **in that** the nozzle bore (15) of the inner nozzle (6) and the annular gap (11) of the annular gap nozzle (8) are interconnected by way of at least one connection opening (16).

7. The gas nozzle as claimed in claim 6, **characterized in that** in the rearward position of the sleeve (10) an annular space (26) which in particular is connected to the environment by way of a guide gap (27) that is provided between the nozzle body (5) and the sleeve (10) remains between the rear end face (21) of the sleeve (10) and the nozzle body (5), and **in that** the at least one connection opening (16) is formed as an opening that extends into the annular space (26).

8. The gas nozzle as claimed in claims 4 and 5, **characterized in that** the inner nozzle (6) and the annular gap nozzle (8) are formed in a nozzle body (5), wherein the nozzle bore (15) of the inner nozzle (6) and the annular gap (11) of the annular gap nozzle (8) are not interconnected, and **in that** an annular space (26) that is provided between the rear end face (21) of the sleeve (10) and the nozzle body (5) is connected to the environment in particular by way of a guide gap (27) that is provided between the nozzle body (5) and the sleeve (10).

9. The gas nozzle as claimed in one of the preceding claims, **characterized in that** that surface part of the sleeve (10) on which the gas pressure acts in a forward direction (20) is larger than that surface part of the sleeve (10) on which the gas pressure acts in a reverse direction (22), or that that surface part of the sleeve (10) on which the gas pressure acts in a forward direction (20) is equal to or smaller than that surface part of the sleeve (10) on which the gas pressure acts in a reverse direction (22).

10. The gas nozzle as claimed in one of the preceding claims, **characterized in that** the internal wall (13) of the annular gap (11) is formed by the wall of the exit opening (100).

11. The gas nozzle as claimed in one of the preceding claims, **characterized in that** the sleeve (10) is displaceably guided on the external wall (12) of the annular gap (11).

12. The gas nozzle as claimed in one of the preceding claims, **characterized in that** the front end face of the sleeve (10) has a run-up slant (18a, 18b) on the internal and/or external side.

13. The gas nozzle as claimed in one of the preceding claims, **characterized in that** the sleeve (10) is formed from ceramics or from a comparable temperature-resistant and electrically non-conducting material or from a plastic that is temperature resistant up to at least 100°C.

14. The gas nozzle as claimed in one of the preceding claims, **characterized in that** the sleeve (10) in the front end face (31) thereof has at least one groove (32), preferably a plurality of grooves (32), that run(s) obliquely to the radial direction, or in the sleeve wall (33) thereof has at least one bore (34), preferably a plurality of bores (34), that run(s) obliquely to the radial direction.

15. The gas nozzle as claimed in one of the preceding claims, **characterized in that** the sleeve (10) in the sleeve wall (33) thereof on the external side has at least one groove (35), preferably a plurality of grooves (35), that run(s) obliquely to the axial direction and/or in the sleeve wall (31) thereof has at least one bore (36), preferably a plurality of bores (36).

## Revendications

1. Buse à gaz (1 ; 1' ; 1" ; 1'") pour une tête d'usinage au laser (2), comportant une ouverture de sortie (100) permettant le passage d'un faisceau laser (3) pour le diriger sur une pièce (4), une fente annulaire (11) entourant l'ouverture de sortie (100) et une douille (10) disposée dans la fente annulaire (11), qui est guidée de manière à pouvoir coulisser axialement entre une position arrière et une position avant dans la fente annulaire (11) et qui fait saillie au-delà de l'ouverture de sortie (100) au moins dans la position avant,
**caractérisée en ce**
**que** la douille (10) est montée de manière à pouvoir basculer dans la fente annulaire (11).

2. Buse à gaz selon la revendication 1, **caractérisée en ce que** la douille (10) présente un collet de centrage (17) périphérique extérieur pointu ou bombé, qui est guidé de manière à pouvoir coulisser sur la paroi extérieure (12) de la fente annulaire (11) et est monté de manière à pouvoir basculer.

3. Buse à gaz selon la revendication 1 ou 2, **caractérisée en ce que** la paroi extérieure (12) de la fente annulaire (11) s'effile dans la direction avant (20) et/ou la paroi de douille s'effile extérieurement dans la direction arrière (20), en particulier de manière conique.

4. Buse à gaz selon l'une des revendications précédentes, **caractérisée en ce que** l'ouverture de sortie (100) est formée par une ouverture de sortie de buse d'une buse intérieure (6) servant à diriger un écoulement central (7) sur la pièce (4).

5. Buse à gaz selon l'une des revendications précédentes, **caractérisée en ce que** la fente annulaire (11) est formée dans une buse à fente annulaire (8) servant à diriger un écoulement de gaz annulaire (9) sur la pièce (4) et **en ce que** la douille (10) libère la surface de section transversale (25) de la buse à fente annulaire (8) plus ou moins largement dans les deux positions, la douille (10) fermant de préférence dans sa première position au moins en grande partie, en particulier complètement, la buse à fente annulaire (8) et libérant la buse à fente annulaire (8) dans son autre position.

6. Buse à gaz selon les revendications 4 et 5, **caractérisée en ce que** la buse intérieure (6) et la buse à fente annulaire (8) sont formées dans un corps de buse (5) et **en ce que** l'orifice de buse (15) de la buse intérieure (6) et la fente annulaire (11) de la buse à fente annulaire (8) sont reliés entre eux par au moins une ouverture de liaison (16).

7. Buse à gaz selon la revendication 6, **caractérisée en ce que** dans la position arrière de la douille (10), il reste entre la face frontale arrière (21) de la douille (10) et le corps de buse (5) un espace annulaire (26) qui est relié à l'environnement extérieur, en particulier par une fente de guidage (27) prévue entre le corps de buse (5) et la douille (10), et **en ce que** ladite au moins une ouverture de liaison (16) est réalisée sous la forme d'une ouverture s'étendant jusque dans l'espace annulaire (26).

8. Buse à gaz selon les revendications 4 et 5, **caractérisée en ce que** la buse intérieure (6) et la buse à fente annulaire (8) sont formées dans un corps de buse (5), l'orifice de buse (15) de la buse intérieure (6) et la fente annulaire (11) de la buse à fente annulaire (8) n'étant pas reliés entre eux, et **en ce qu'**un espace annulaire (26) prévu entre la face frontale arrière (21) de la douille (10) et le corps de buse (5) est relié à l'environnement extérieur, en particulier par l'intermédiaire d'une fente de guidage (27) prévue entre le corps de buse (5) et la douille (10).

9. Buse à gaz selon l'une des revendications précédentes, **caractérisée en ce que** la partie de surface de la douille (10) sur laquelle la pression de gaz agit dans une direction avant (20) est plus grande que la partie de surface de la douille (10) sur laquelle la pression de gaz agit dans une direction arrière (22), ou **en ce que** la partie de surface de la douille (10) sur laquelle la pression de gaz agit dans une direction avant (20) est égale ou plus petite que la partie de surface de la douille (10) sur laquelle la pression de gaz agit dans une direction arrière (22).

10. Buse à gaz selon l'une des revendications précédentes, **caractérisée en ce que** la paroi intérieure (13) de la fente annulaire (11) est formée par la paroi de l'ouverture de sortie (100).

11. Buse à gaz selon l'une des revendications précédentes, **caractérisée en ce que** la douille (10) est guidée de manière à pouvoir coulisser sur la paroi extérieure (12) de la fente annulaire (11).

12. Buse à gaz selon l'une des revendications précédentes, **caractérisée en ce que** la face frontale avant de la douille (10) présente un biais d'attaque (18a, 18b) du côté intérieur et/ou extérieur.

13. Buse à gaz selon l'une des revendications ci-dessus, **caractérisée en ce que** la douille (10) est formée d'un matériau céramique ou d'un matériau électriquement non conducteur et résistant à la température ou d'une matière plastique résistant à la température jusqu'à au moins 100 °C.

14. Buse à gaz selon l'une des revendications ci-dessus, **caractérisée en ce que** la douille (10) présente dans sa face frontale avant (31) au moins une, de préférence plusieurs rainures (32) s'étendant obliquement par rapport à la direction radiale ou dans sa paroi de douille (33) au moins un, de préférence plusieurs orifices (34) s'étendant obliquement par rapport à la direction radiale.

15. Buse à gaz selon l'une des revendications ci-dessus, **caractérisée en ce que** la douille (10) présente extérieurement dans sa paroi de douille (33) au moins une, de préférence plusieurs rainures (35) s'étendant obliquement par rapport à la direction axiale et/ou dans sa paroi de douille (31) au moins une, de préférence plusieurs orifices (36).
